# EUROPEAN PATENT APPLICATION

(11) **EP 2 036 646 A1**
(43) Date of publication of application: **18.03.2009**
(21) Application number: 08252828.2
(22) Date of filing: 27.08.2008
(51) Int. Cl.: B23K 9/04, F01D 5/00, C23C 26/02

(54) **Method of repairing a turbine engine component**

(30) Priority: 31.08.2007 US 848506
(71) Applicant: United Technologies Corporation, Hartford, CT 06101 (US)
(72) Inventor: Hixson, Michael W., Wetherfield, CT 06109 (US); Bunting, Billie W., Colchester, CT 06415 (US); Shepler, Robert E., South Windsor, CT 06074 (US)
(74) Representative: Leckey, David Herbert

(57) **Abstract**

A method of repairing a turbine engine component (30), such as an airfoil platform (34), is provided. The platform (34) includes a surface having a worn or damaged area (62) penetrating the surface, the worn area may result from galling, for example. An electrospark deposition process (ESD) is used to deposit material to the worn or damaged area (62). The ESD process transfers material from an electrode (38) associated with the ESD machine through a pulsating current that deposits the material onto the worn or damaged area (62). The material can then be machined to restore the surface to a desired specification. The ESD process is used to repair worn compressor and/or turbine blades and vanes (30) that would otherwise be scrapped.

## Description

### BACKGROUND

This application relates to a method and system of repairing turbine engine components. In one example, a method and system is disclosed for repairing an airfoil platform, for example, by using an electrospark deposition (ESD) process.

Turbine engines utilize various airfoils in the compressor and turbine stages of the turbine engine. For example, compressor vanes include an airfoil portion supported by a platform. The platform includes fore and aft axial attachment lands that fit into liners assembled in inner diameter slots within an inner case and/or rotor path rings in an outer duct. Features on the platform position the vanes radially and provide the desired axial and circumferential tilt of the airfoil. Furthermore, the platform prevents rotation of the vane about an airfoil stacking line.

During normal engine operation, contact between the platform and liner rings induces galling on various features of the platform. For example, galling can occur on the fore and aft axial attachment lands, radial attachment lands and circumferential cheeks, which results from contact with adjacent vanes.

When galling or damage on the various platform features exceeds the blend repair limits of the airfoil, the airfoil must be replaced, which is expensive. While an ESD process has been proposed for joining two halves of an airfoil portion, ESD has not been used for repairing worn or damaged surfaces of an airfoil.

What is needed is a method and system for repairing surfaces of a turbine engine component, such as an airfoil platform.

### SUMMARY

A method of repairing a turbine engine component, such as an airfoil platform, is provided. The component includes a surface having a worn or damaged area penetrating the surface. The worn area may result from galling, for example. An electrospark deposition process (ESD) is used to deposit material to the worn area. In the disclosed embodiment, the ESD process transfers material from an electrode associated with an ESD machine through a pulsating current that deposits the material onto the worn area. The deposited material can then be machined to restore the surface to a desired specification. The ESD process is used to repair worn or damaged compressor and/or turbine blades and vanes that would otherwise be scrapped.

These and other features of the application can be best understood from the following specification and drawings, the following of which is a brief description.

### BRIEF DESCRIPTION OF THE DRAWINGS

Figure 1 is a highly schematic view of an example turbine engine.
Figure 2A is a schematic view an electrospark deposition (ESD) process.
Figures 2B-2D are respectively schematic views of a worn or damaged area, material deposited onto the worn or damaged area, and the material in the previously worn or damaged area subsequent to machining.
Figures 3A and 3B respectively depict side and top elevational views of one example airfoil.
Figures 4A and 4B respectively depict side and top elevational views of another example airfoil.

### DETAILED DESCRIPTION OF THE PREFERRED EMBODIMENT

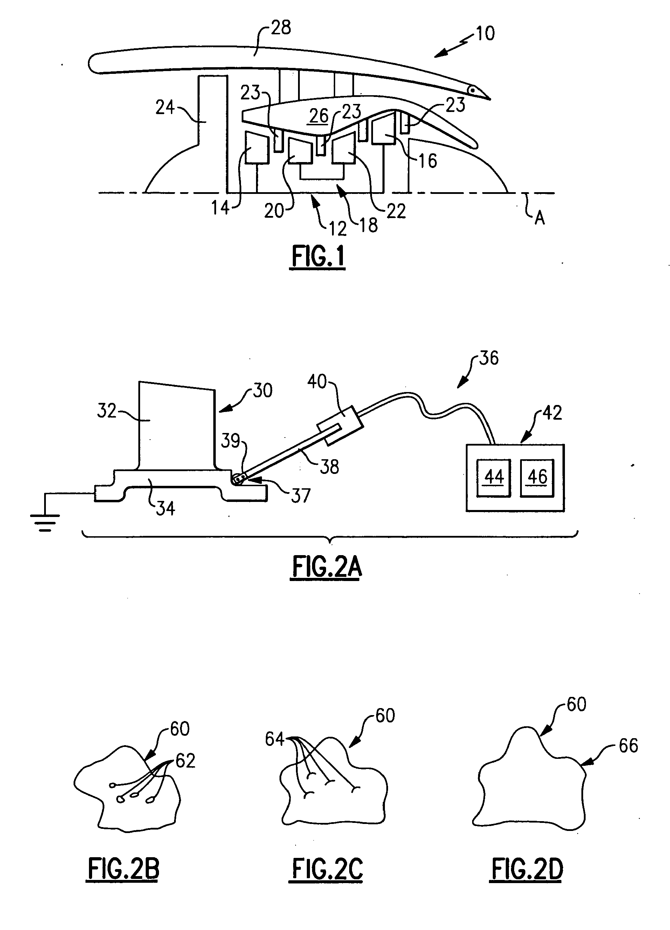

One type of turbine engine 10 is shown schematically in Figure 1. The turbine engine 10 includes a low spool 12 having a low pressure compressor and turbine 14, 16. In the example, a fan 24 is also driven by the low spool 12. The turbine engine 10 also includes a high spool 18 having a high pressure compressor and turbine 20, 22. The low and high spools 12, 18 rotated about an axis A. Stator vanes 23 are arranged adjacent to each stage of the low pressure compressor and turbine 14, 16 and high pressure compressor and turbine 20, 22. However, it should be understood that the application relates to any type of turbine engine.

The low and high spools 12, 18 are housed within a core nacelle 26. The core nacelle 26 and fan 24 are arranged within a fan nacelle 28. The turbine engine 10 utilizes various airfoils in the compressor and turbine stages. For example, airfoils include compressor and turbine blades and the stator vanes 23. During engine operation, the airfoils become damaged or worn due to galling, for example, thus requiring their repair or replacement. In one example, an airfoil 30, which is shown in Figure 2A, can be repaired so that the worn or damaged area is restored to extend the service life of the airfoil.

Referring to Figures 2A-2D, the example airfoil 30 includes an airfoil portion 32 extending from a platform 34. The platform 34 is used to locate the airfoil 30 in the axial and radial directions. The airfoils 30, are arranged circumferentially about the rotational axis A of the turbine engine 10. Various features of the platform 34 are subject to galling or damage, which can render the airfoil 30 scrap. In one example, an electrospark deposition (ESD) process is employed to repair the worn or damaged area.

Referring to Figure 2A, an ESD machine 36 includes a rod 38 supported by a holder 40. The ESD machine 36, which is very schematically represented in Figure 2A, includes a spark generator 42 having a voltage source 44 and a processor 46. In one example, the voltage source 44 is a DC voltage source. The processor 46 regulates the voltage source 44 to deliver a pulsating current at a desired current level and frequency for the application. In one example, the DC voltage is approximately 10-15 volts.

In operation, the airfoil 30 is grounded. An arc 37 is generated between the rod 38 and a repair area 60 having a worn area 62. In one example, the rod 38 is constructed from a material that is substantially the same material as the airfoil 30. In another example, the rod 38 is constructed from a material with substantially different properties than the airfoil 30 in order to increase wear resistance or impart some other desirable property to the repaired area. The arc 37 is pulsed, which delivers material 39 from the rod 38 to the worn area 62 to provide deposited material 64 to the repair area 60. The deposited material 64 is built up with thin layers that are metallurgically bonded to the airfoil 30. The ESD process does not generate significant heat in the repair area 60, so there is a minimal heat affected zone and the repair area 60 is not distorted. The deposit material 64 can then be machined, for example, by grinding, to provide a machined area 66 which restores the surface to a desired specification, as shown in Figure 2D. The airfoil 30 may be heat treated prior to or subsequent to machining.

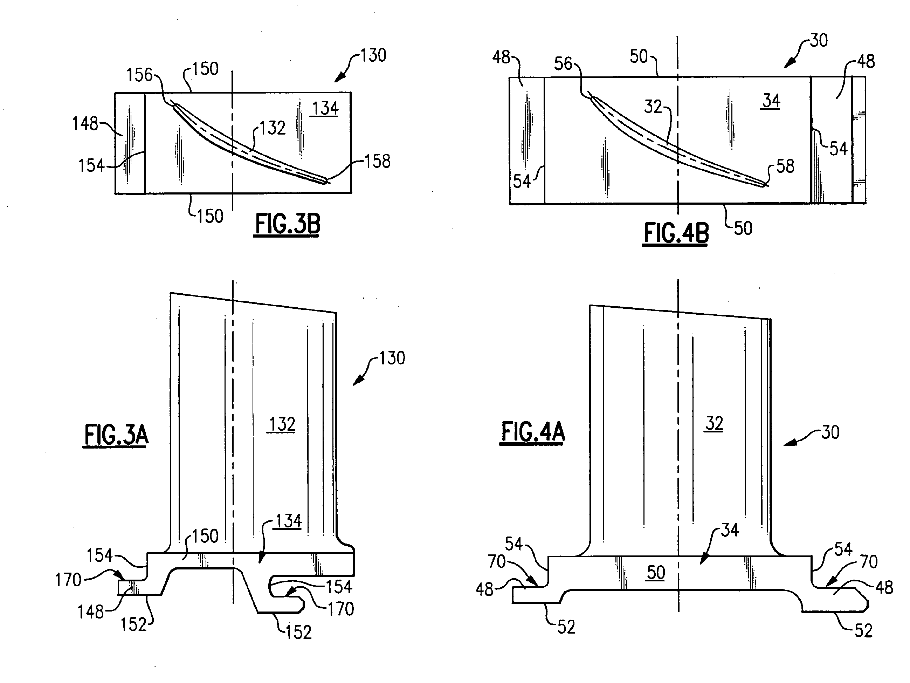

Example compressor vanes are shown in Figures 3A-4B. Like numerals indicate similar features between the example compressor vanes 30, 130. Referring to Figures 3A, 3B, 4A and 4B, the airfoil portion 32, 132 is shown extending from the platform 34, 134 and includes leading edges 56, 156 and trailing edges 58, 158. The platform 34, 134 includes feet or hooks 48, 148 that are used to secure the airfoil 30, 130 to a support structure, such as an inner case or rotor ring. The airfoils 30, 130 are arranged circumferentially about the axis so that circumferential cheeks 50, 150 are arranged adjacent to a circumferential cheek of an adjoining airfoil. The platform 34, 134 includes radial attachment lands 70, 170, 52, 152 and axial faces 54, 154. Depending upon the application, one or more of the circumferential cheeks 50, 150, one or more radial attachment lands 70, 170, 52, 152 and/or one or more axial faces 54, 154 may become worn or damaged. The airfoil is inspected during a turbine engine maintenance procedure to identify any worn or damaged areas on the surfaces of the airfoil. The worn or damaged areas can be repaired according to the procedure described above, for example.

Although an example embodiment has been disclosed, a worker of ordinary skill in this art would recognize that certain modifications would come within the scope of the claims. For that reason, the following claims should be studied to determine their true scope and content.

## Claims

1. A method of repairing a turbine engine component (30;130) having a surface having a damaged area (62) penetrating the surface, the method comprising the steps of:
depositing material (64) by electrospark deposition to the damaged area (62); and
machining the material (64) to restore the surface to a desired specification.

2. The method according to claim 1, wherein the turbine engine component comprises an airfoil (30;130) including at least one of: a blade and a vane.

3. The method according to claim 2, wherein the airfoil includes an airfoil portion (32;132) extending from a platform (34;134), and the damaged area (62) is on the surface of the platform (32;132).

4. The method according to claim 3, wherein the surface comprises at least one of: a circumferential cheek (50;150), a radial attachment land (70,52;170,152) and an axial face (54;154).

5. The method according to any preceding claim, wherein the surface is constructed from a second material, the material and the second material being substantially the same.

6. The method according to any of claims 1 to 4, wherein the surface is constructed from a second material, the material and the second material being substantially different.

7. The method according to any preceding claim, wherein the material (64) is provided by a rod (38), the depositing step includes an arc (37) extending between the rod (38) and the surface, the material (64) transferred from the rod (38) through the arc (37) to the damaged area (62).

8. The method according to any preceding claim, comprising the step of heat treating the turbine engine component (30;130).

9. A system of repairing a component surface comprising:
a component (30;130) having a surface including a damaged area (62), a material arranged on the damaged area to achieve at least a desired specification; and
an electrospark deposition machine (36) including a rod (38), the electrospark deposition machine configured to produce a pulsating current for depositing material (64) from the rod (38) to the damaged area (62).

10. The system of claim 9, wherein the rod (38) comprises a material corresponding to the material of the component (30;130).

11. The system of claim 9, wherein the rod (38) comprises a material different than the material of the component (30;130).

12. A gas turbine engine component comprising:
at least one repaired surface, each repaired surface comprising an electrospark deposition deposited material (64) thereon, wherein the electrospark deposition deposited material (64) has been machined to restore the repaired surface to desired specifications.

13. The component of claim 12, wherein the gas turbine engine component comprises an airfoil (32;132).

14. The component of claim 12 or 13, wherein the electrospark deposition deposited material (64) comprises substantially the same material as the component (30;130).

15. The component of claim 12 or 13, wherein the electrospark deposition deposited material (64) is different than the material of the component (30;130).
